# EUROPEAN PATENT APPLICATION

(11) **EP 4 674 293 A1**
(43) Date of publication of application: **07.01.2026**
(21) Application number: 24769876.4
(22) Date of filing: 08.03.2024
(51) Int. Cl.: A24F 40/465, A24F 40/40, A24F 40/50, A24F 40/53, A24F 40/57

(54) **AEROSOL GENERATION APPARATUS AND CONTROL METHOD FOR AEROSOL GENERATION APPARATUS**

(30) Priority: 10.03.2023 CN 202310265609
(71) Applicant: Shenzhen First Union Technology Co., Ltd., Shenzhen, Guangdong 518000 (CN)
(72) Inventor: FAN, Qiang, Shenzhen, Guangdong 518000 (CN); CAO, Guangping, Shenzhen, Guangdong 518000 (CN); XU, Zhongli, Shenzhen, Guangdong 518000 (CN); LI, Yonghai, Shenzhen, Guangdong 518000 (CN)
(74) Representative: Viering, Jentschura & Partner mbB Patent- und Rechtsanwälte
(86) International application number: PCT/CN2024/080796
(87) International publication number: WO 2024/188183

(57) **Abstract**

Provided are an aerosol generating device (100) and a control method for an aerosol generating device (100). The aerosol generating device (100) includes: a heating element (20) and a power supply unit (40); a heating circuit (51) with one end electrically connected to the power supply unit (40) and the other end electrically connected to the heating element (20); and a controller (60). The heating circuit (51) includes: a first branch (511) and a second branch (512) connected in parallel to the first branch (511). The aerosol generating device (100) has a preheating stage and a puffing stage. The controller (60) is electrically connected to a first switching element (5121) and a second switching element (5113). The controller (60) is configured to control, in the preheating stage, the first switching element (5121) to be in an off state and the second switching element (5113) to be in an on state, and the power supply unit (40) provides electric energy to the heating element (20) through the first branch (511); and the controller (60) is configured to control, in the puffing stage, the first switching element (5121) to be in an on state and the second switching element (5113) to be in an off state, and the power supply unit (40) provides electric energy to the heating element (20) through the second branch (512). In this way, power consumption of the aerosol generating device can be reduced.

## Description

### CROSS-REFERENCE TO RELATED APPLICATIONS

This application claims priority to Chinese Patent Application No. 202310265609.0, entitled "AEROSOL GENERATING DEVICE AND CONTROL METHOD FOR AEROSOL GENERATING DEVICE" filed with China National Intellectual Property Administration on March 10, 2023, which is incorporated by reference in its entirety.

### TECHNICAL FIELD

Embodiments of this application relate to the field of aerosol technologies, and in particular, to an aerosol generating device and a control method for an aerosol generating device.

### BACKGROUND

During use of conventional tobacco products (such as cigarettes and cigars), tobacco is burned to produce tobacco smoke. In the prior art, there are products that release compounds by heating without burning to replace these conventional tobacco products. Examples of such products are aerosol generating devices. The devices each generally include a chamber and a heating element. The chamber is configured to accommodate a cigarette-like aerosol product used in combination with the aerosol generating device. The heating element is configured to heat the aerosol product in the chamber, so that some active substances in the aerosol product are heated and volatilized to generate an aerosol.

Usually, the above-mentioned aerosol generating device has a preheating stage and a puffing stage. The preheating stage refers to a stage in which a battery cell of the aerosol generating device rapidly heats the aerosol product to a predetermined temperature through the heating element by high-power electric discharge, so that a user can obtain smoke through puffing. The puffing stage refers to a stage in which during puffing by the user, the battery cell maintains the temperature of the aerosol product through relatively low heating power, to ensure that the user can obtain smoke through puffing in an entire cigarette puffing process. Regardless of the preheating stage or the puffing stage, in the current aerosol generating device, the battery cell supplies power to the heating element through a same power supply circuit. This results in an unnecessary power loss in the puffing stage.

### SUMMARY

An embodiment of this application provides an aerosol generating device to solve the technical problem that unnecessary power consumption is caused in a puffing stage at present.

An aerosol generating device includes:
a heating element, configured to heat an aerosol product to generate an aerosol;
a power supply unit, configured to provide electric energy to the heating element;
a heating circuit with one end electrically connected to the power supply unit and the other end electrically connected to the heating element; and
a controller, configured to control the power supply unit to provide electric energy to the heating element through the heating circuit, where
the heating circuit includes:
   a first branch provided with a second switching element and a booster circuit connected in series to the second switching element, where one end of the second switching element is electrically connected to the power supply unit, and one end of the booster circuit is electrically connected to the heating element;
   a second branch provided with a first switching element, where one end of the first switching element is electrically connected to the power supply unit, and the other end of the first switching element is electrically connected to the heating element; and
   a drive circuit having an input terminal and an output terminal, where the input terminal is electrically connected between the second switching element and the booster circuit, the output terminal is electrically connected to the booster circuit, the input terminal is configured to supply power to the drive circuit, and the output terminal is configured to provide a driving signal to the booster circuit,
   where the aerosol generating device has a preheating stage and a puffing stage, the controller is electrically connected to the first switching element and the second switching element, and the controller is configured to control, in the preheating stage, the first switching element to be in an off state and the second switching element to be in an on state, so that the power supply unit provides electric energy to the heating element through the first branch; and the controller is configured to control, in the puffing stage, the first switching element to be in an on state and the second switching element to be in an off state, so that the power supply unit provides electric energy to the heating element through the second branch.

In an embodiment, the first switching element is configured to be turned on or off according to a second preset temperature in the puffing stage and a second actual temperature of the heating element in the puffing stage.

In an embodiment, the first switching element includes a metal-oxide-semiconductor field-effect transistor (MOS transistor).

In an embodiment, the first switching element includes a first P-channel metal-oxide-semiconductor field-effect transistor (PMOS transistor) and a second PMOS transistor, gates of the first PMOS transistor and the second PMOS transistor are both electrically connected to the controller, a source of the first PMOS transistor is electrically connected to a positive electrode of the power supply unit, a source of the second PMOS transistor is electrically connected to the heating element, and a drain of the first PMOS transistor is electrically connected to a drain of the second PMOS transistor.

In an embodiment, the second branch further includes a third switching element, the third switching element has an input terminal and an output terminal, the input terminal is electrically connected to the controller, the output terminal is electrically connected to a gate in the first switching element, and the third switching element is in such a configuration that the third switching element is turned on and outputs a low-level signal when the controller outputs a high-level signal; and the third switching element is in an off state when the controller outputs a low-level signal.

In an embodiment, the third switching element includes an N-channel metal-oxide-semiconductor field-effect transistor (NMOS transistor), a gate of the NMOS transistor is electrically connected to the controller, a source of the NMOS transistor is electrically connected to a reference ground, and a drain of the NMOS transistor is electrically connected to a gate in the first switching element.

In an embodiment, the second branch further includes a fourth switching element connected in series to a first switch, the fourth switching element is connected between the heating element and a reference ground, the first switching element is configured to be in an on state, and the fourth switching element is configured to be turned on or off according to a second preset temperature in the puffing stage and a second actual temperature of the heating element in the puffing stage.

In an embodiment, the fourth switching element includes an NMOS transistor, a gate of the NMOS transistor is electrically connected to the controller, a drain of the NMOS transistor is electrically connected to the heating element, and a source of the NMOS transistor is electrically connected to the reference ground.

An embodiment of this application further provides a control method for an aerosol generating device. The control method is applied to the aerosol generating device in the above-mentioned embodiment, and the control method includes:
obtaining an operating status of the aerosol generating device, where the operating status includes a preheating stage and a puffing stage;
controlling, in the preheating stage, the first switching element to be in an off state and the second switching element to be in an on state, so that the power supply unit provides electric energy to the heating element through the first branch; and
controlling, in the puffing stage, the first switching element to be in an on state and the second switching element to be in an off state, so that the power supply unit provides electric energy to the heating element through the second branch.

In an embodiment, the aerosol generating device further includes a temperature sensing element, the temperature sensing element is configured to measure a temperature of the heating element, and the control method further includes:
obtaining a first actual temperature of the heating element in the preheating stage;
comparing the first actual temperature with a first preset temperature; and
controlling the second switching element to be in an off state and the first switching element to be in an on state, if the first actual temperature reaches the first preset temperature, so that power supply by the power supply unit to the heating element through the first branch is switched to power supply to the heating element through the second branch.

In an embodiment, after the controlling the first switching element to be in an on state and the second switching element to be in an off state, so that the power supply unit provides electric energy to the heating element through the second branch, the method further includes:
obtaining a second actual temperature of the heating element in the puffing stage;
comparing the second actual temperature with a second preset temperature; and
controlling the first switching element to be in an off state if the second actual temperature is greater than the second preset temperature, or
controlling the first switching element to be in an on state if the second actual temperature is less than the second preset temperature.

In the aerosol generating device provided in the above-mentioned embodiment, the first branch and the second branch that are connected in parallel are arranged between the power supply unit and the heating element, so that when the aerosol generating device is in the preheating stage, the controller controls the first switching element to be in an off state and the second switching element to be in an on state, so that the power supply unit provides electric energy to the heating element through the first branch; and when the aerosol generating device is in the puffing stage, the controller controls the first switching element to be in an on state and the second switching element to be in an off state, so that the power supply unit provides electric energy to the heating element through the second branch.

Compared with the prior art, in the aerosol generating device provided by this embodiment, power consumption caused by the drive circuit in the puffing stage can be avoided, thereby improving a battery life of the aerosol generating device to some extent.

### BRIEF DESCRIPTION OF THE DRAWINGS

One or more embodiments are exemplarily described with reference to corresponding accompanying drawings, and the exemplary descriptions do not construe a limitation to the embodiments. Elements having same reference numerals in the accompanying drawings represent similar elements, and unless otherwise particularly stated, figures in the accompanying drawings do not constitute a scale limitation.
FIG. 1 is a schematic structural diagram of an aerosol generating device according an embodiment of this application;
FIG. 2 is a schematic structural diagram of an aerosol generating device according to another embodiment of this application;
FIG. 3 is a schematic structural diagram of an aerosol generating device according to still another embodiment of this application;
FIG. 4 is a schematic diagram of a circuit structure of the aerosol generating device in FIG. 1;
FIG. 5 is a schematic diagram of a circuit structure of a second branch in FIG. 4;
FIG. 6 is a schematic diagram of another circuit structure of the second branch in FIG. 4;
FIG. 7 is a schematic diagram of still another circuit structure of the second branch in FIG. 4;
FIG. 8 is a schematic structural diagram of a booster circuit of a first branch in FIG. 4; and
FIG. 9 is a schematic flowchart of a control method for an aerosol generating device according an embodiment of this application.

### Reference numerals in the figures:

100. Aerosol generating device; 10. Chamber; 20. Heating element; 30. Coil; 40. Power supply unit; 50. Mainboard; 60. Controller; 200. Aerosol product;
51. Heating circuit; 511. First branch; 5113. Second switching element; 5112: Booster circuit; 512. Second branch; 5121. First switching element; 5111. Drive circuit; 51211. First PMOS transistor; 51212. Second PMOS transistor; 5122: Third switching element; 5123. Fourth switching element; 51121. First NMOS transistor; 51122. Second NMOS transistor; 51123. Inductor.

### DETAILED DESCRIPTION

For ease of understanding of this application, this application is described in more detail below with reference to the accompanying drawings and specific embodiments. It should be noted that, when an element is expressed as "being fixed to" another element, the element may be directly on the another element, or one or more intermediate elements may exist between the element and the another element. When one element is expressed as "being connected to" another element, the element may be directly connected to the another element, or one or more intermediate elements may exist between the element and the another element. The terms "upper", "lower", "left", "right", "inner", "outer", and similar expressions used in this specification are only used for an illustrative purpose.

Unless otherwise defined, meanings of all technical and scientific terms used in this specification are the same as those usually understood by a person skilled in the art to which this application belongs. Terms used in the specification of this application are merely intended to describe objectives of the specific embodiments, but are not intended to limit this application. The term "and/or" used in this specification includes any and all combinations of one or more related listed items.

In addition, technical features involved in different embodiments of this application described below may be combined with each other if there is no conflict between the technical features.

In the embodiments of this application, the term "mounting" includes fixing or restricting an element or a device to a specific position or place in a manner such as soldering, screwing, snap-fit connection, or adhesion. The element or the device may remain still at the specific position or place or may move within a limited range. The element or the device may be disassembled or may not be disassembled after being fixed or restricted to the specific position or place. This is not limited in the embodiments of this application.

In addition, the terms "first" and "second" are used for descriptive purposes only, and cannot be construed as indicating or implying relative importance or implicitly indicating the number of technical features indicated. Therefore, a feature limited by "first" or "second" may explicitly or implicitly include one or more of the features. In description of this application, "a plurality of" means at least two, such as two or three, unless otherwise explicitly and specifically defined.

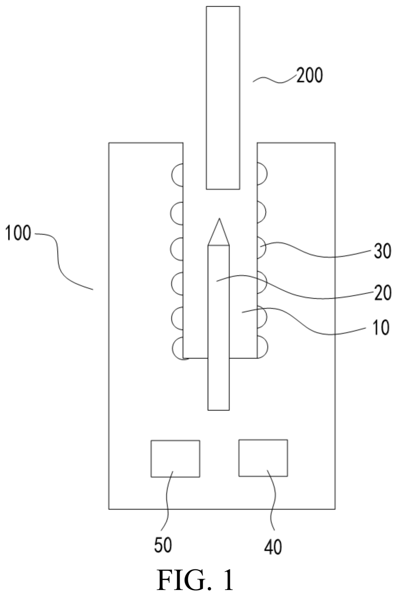

An embodiment of this application provides an aerosol generating device 100. As shown in FIG. 1, the aerosol generating device includes a chamber 10, a heating element 20, a coil 30, a power supply unit 40, and a mainboard 50. The coil 30 and the power supply unit 40 are both electrically connected to the mainboard 50. A controller of the aerosol generating device is arranged on the mainboard 50. The chamber 10 is configured to accommodate an aerosol product 200. The heating element 20 at least partially extends into the chamber 10, and an end portion of the heating element that extends into the chamber 10 is shaped like a pin or a sheet, so that the heating element 20 is inserted into the aerosol product 200 for heating. The coil 30 is wound around an outer wall of the chamber 10, and the mainboard 50 controls the power supply unit 40 to introduce an alternating current into the coil 30. The coil 30 generates an alternating magnetic field under the action of the alternating current, and the alternating magnetic field penetrates the heating element 20 to cause the heating element 20 to generate an eddy current through induction. The heating element 20 generates heat under the action of the eddy current, to heat the aerosol product 200. The power supply unit 40 may be a rechargeable battery cell or a non-rechargeable battery cell.

The aerosol product 200 may preferably be configured in the shape of an elongated cigarette to facilitate insertion of the aerosol product 200 into the aerosol generating device. The aerosol product 200 is preferably made of a tobacco-containing material that releases a volatile compound from a substrate when heated, or may be made of a non-tobacco material that is suitable for producing smoke through electrical heating after being heated. The aerosol product 200 is preferably a solid substrate, and may include one or more of powers, particles, fragments, strips, or sheets of one or more of vanilla leaves, tobacco leaves, homogenized tobacco, and expanded tobacco. Alternatively, the solid substrate may include an additional tobacco or non-tobacco volatile aroma compound that is released when the substrate is heated.

The heating element 20 may be made of any one of graphite, molybdenum, silicon carbide, stainless steel, niobium, aluminum, nickel, iron, copper, a nickel-containing compound, titanium, and a metal material complex. In some embodiments, to better generate an eddy current through induction to improve heating efficiency, the chamber is preferably made of a ferromagnetic material. The ferromagnetic material is, for example, ferritic iron, a ferromagnetic alloy (such as ferromagnetic steel or stainless steel), ferromagnetic particles, or ferrite.

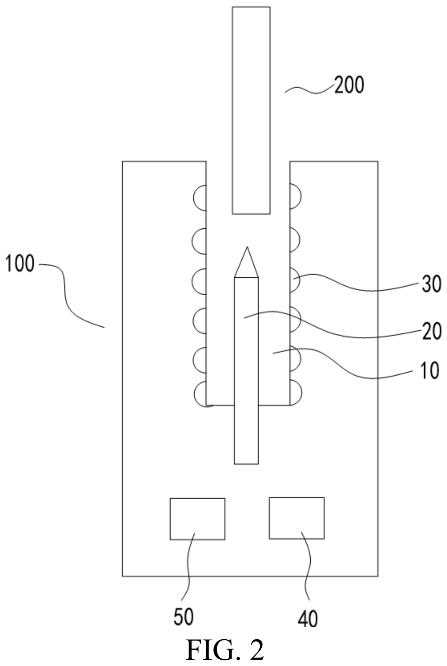

Alternatively, in some embodiments, as shown in FIG. 2, the heating element 20 may be made of a resistance heating material that can generate heat when energized, and has electrode pins (not shown), and the electrode pins are electrically connected to the mainboard 50. Therefore, the controller on the mainboard 50 can control the power supply unit 40 to provide electric energy to the heating element 20 through the electrode pins. For example, the heating element 20 may be a ceramic heating body, and the ceramic heating body is a heating element manufactured by sintering an electric heating body and ceramics at a high temperature and fixing the electric heating body and the ceramics together.

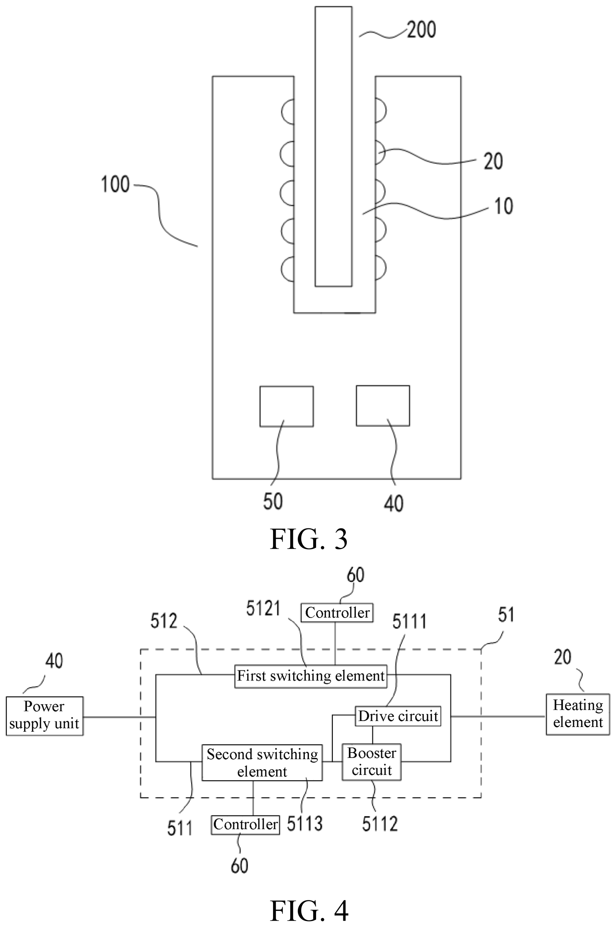

Alternatively, in some embodiments, as shown in FIG. 3, the heating element 20 is a mesh-like resistance heating body covering an outer wall of the chamber 10. After being energized, the heating element 20 generates heat, and the heat is transferred to the chamber 10 through a chamber wall of the chamber 10 to heat the aerosol product 200 in the chamber 10. In this case, a chamber body of the chamber 10 is made of a material with high thermal conductivity, so as to efficiently conduct the heat generated by the heating element 20 to the aerosol product 200. The material with high thermal conductivity may be a metal or ceramic material, and the ceramic material may be any one of an oxide, a nitride, a carbide, a boride, and the like.

Alternatively, in some embodiments, the aerosol generating device 100 may alternatively use infrared heat. Specifically, the outer wall of the chamber 10 may be coated with an infrared electrothermal coating. The infrared electrothermal coating is configured to receive electric power to generate heat, to generate infrared rays with a certain wavelength. When the wavelength of the infrared rays matches an absorption wavelength of the aerosol product 200, energy of the infrared rays can be easily absorbed by the aerosol product 200, thereby generating heat on the aerosol product 200.

Further, as shown in FIG. 4, a controller 60 and a heating circuit 51 of the aerosol generating device 100 are arranged on the mainboard 50. One end of the heating circuit 51 is electrically connected to the power supply unit 40, and the other end thereof is electrically connected to the heating element 20. The controller 60 controls the power supply unit 40 to provide electric energy to the heating element 20 through the heating circuit 51. The heating circuit 51 includes:
a first branch 511, where a second switching element 5113 and a booster circuit 5112 connected in series to the second switching element 5113 are arranged on the first branch 511, one end of the second switching element 5113 is electrically connected to the power supply unit 40, and one end of the booster circuit 5112 is electrically connected to the heating element 20;
a second branch 512, where a first switching element 5121 is arranged on the second branch 512, one end of the first switching element 5121 is electrically connected to the power supply unit 40, and the other end of the first switching element 5121 is electrically connected to the heating element 20, so that the first branch 511 and the second branch 512 are connected in parallel between the power supply unit 40 and the heating element 20; and
a drive circuit 5111 having an input terminal and an output terminal, where the input terminal is electrically connected between the second switching element 5113 and the booster circuit 5112, the output terminal is electrically connected to the booster circuit 5112, the input terminal is configured to cause the first branch 511 to supply power to the drive circuit 5111, and the output terminal is configured to provide a driving signal to the booster circuit 5112, to drive the booster circuit 5112 to operate normally.

The aerosol generating device 100 usually has a preheating stage and a puffing stage. The preheating stage refers to a stage in which the power supply unit 40 of the aerosol generating device 100 provides electric energy to the heating element 20 at high power, so that the temperature of the heating element 20 quickly rises to a first preset temperature, and a user can inhale an aerosol through puffing at the first preset temperature. The puffing stage refers to a stage in which the user can use the aerosol product 200 for puffing. In this stage, the power supply unit 40 maintains the heating element 20 at a second preset temperature by providing relatively low heating power. The second preset temperature may be basically the same as the first preset temperature, or slightly greater or less than the first preset temperature, to ensure that the user can obtain an aerosol through puffing throughout the entire puffing stage.

The controller 60 is configured to be electrically connected to the first switching element 5121 and the second switching element 5113. When the aerosol generating device 100 is in the preheating stage, the controller 60 controls the first switching element 5121 to be in an off state and the second switching element 5113 to be in an on state, so that the power supply unit 40 provides electric energy to the heating element 40 through the first branch 511. In this case, because the first branch 511 is connected, the first branch 511 can supply power to the drive circuit 5111, and then the drive circuit 5111 generates a driving signal to drive the booster circuit 5112 to operate. The booster circuit 5112 raises the voltage of the power supply unit 40 and applies the voltage to the heating element 20, so that the heating element 20 can heat up quickly.

When the aerosol generating device 100 is in the puffing stage, the controller 60 controls the first switching element 5121 to be in an on state and the second switching element 5113 to be in an off state, so that the power supply unit 40 provides electric energy to the heating element 20 through the second branch 512.

Currently, in the prior art, regardless of the preheating stage or the puffing stage, the power supply unit 40 provides electric energy to the heating element 20 through the first branch 511, but the drive circuit 5111 in the first branch 511 is prone to power consumption. In the aerosol generating device 100 provided in this embodiment, the second branch 512 connected in parallel to the first branch 511 is arranged between the power supply unit 40 and the heating element 20, so that when the aerosol generating device 100 is in the preheating stage, the power supply unit 40 can provide electric energy to the heating element 20 through the first branch 511; and when the aerosol generating device 100 is in the puffing stage, the power supply unit 40 provides electric energy to the heating element 20 through the second branch 512. Since there is no drive circuit 5111 in the second branch 512, when the aerosol generating device 100 is in the puffing stage, power consumption caused by the drive circuit 5111 in the puffing stage can be avoided, thereby improving the battery life of the aerosol generating device 100 to some extent.

For example, an aerosol generating device 100 in the prior art can allow 10 aerosol products 200 to be puffed after being fully charged, but after the solution provided by this embodiment is adopted, the aerosol generating device 100 can allow 11 aerosol products 200 to be puffed after being fully charged, and can allow one more aerosol product 200 to be puffed compared with the aerosol generating device 100 in the prior art.

In some embodiments, a temperature sensing element (not shown) is arranged on the heating element 20, and the temperature sensing element is electrically connected to the controller 60 of the aerosol generating device 100. The temperature sensing element is configured to measure an actual temperature of the heating element 20 and transmit the actual temperature to the controller 60. When the user needs to use the aerosol generating device 100 for puffing, the aerosol generating device 100 is started, and the aerosol generating device 100 enters the preheating stage. In this stage, the controller 60 controls the first switching element 5121 to be in an off state and the second switching element 5113 to be in an on state, and the power supply unit 40 provides electric energy to the heating element 20 through the first branch 511, so that the power supply unit 40 can supply power to the heating element 20 at higher power. The temperature of the heating element 20 rises rapidly under the action of high-power power supply, and the temperature sensing element obtains a first actual temperature of the heating element 20 and transmits the first actual temperature to the controller 60, so that the controller 60 can compare the first actual temperature with the first preset temperature. When the first actual temperature reaches the first preset temperature, the controller 60 determines that preheating of the aerosol generating device 100 is completed, the controller 60 controls the first switching element 5121 to be in an on state and the second switching element 5113 to be in an off state, and the power supply unit 40 provides electric energy to the heating element 20 through the second branch 512, so that the aerosol generating device 100 enters the puffing stage.

It is easy to understand that the first preset temperature may be preset in the controller 60. The first preset temperature is a temperature that needs to be reached in the preheating stage. At this first preset temperature, an appropriate aerosol can be generated by heating the aerosol product 200 by the heating element 20.

In some other embodiments, whether the preheating stage is completed may alternatively be determined by obtaining a heating time of the heating element 20, without obtaining the temperature of the heating element 20. Generally, the preheating stage of the aerosol generating device 100 has a fixed time. In this case, a timer may be arranged in the aerosol generating device 100. When the user starts the aerosol generating device 100, the aerosol generating device 100 enters the preheating stage, the controller 60 controls the power supply unit 40 to provide electric energy to the heating element through the first branch 511, and the controller 60 starts the timer. The timer is configured to record the heating time of the heating element 20 in the preheating stage. When the heating time reaches a preset heating time, the controller 60 can determine that the preheating stage is completed, and the controller 60 controls the power supply unit 40 to provide electric energy to the heating element through the second branch 512, so that the aerosol generating device 100 enters the puffing stage.

In some embodiments, the first switching element 5121 is configured to maintain the temperature in the puffing stage at a second preset temperature, and at the second preset temperature, it can be ensured that an aerosol can be generated when the user puffs on the aerosol product 200.

Specifically, if the second preset temperature in the puffing stage is 200°C, after the first switching element 5121 is turned on, the power supply unit 40 provides electric energy to the heating element 20 through the second branch 512, and the temperature of the heating element 20 may continue rising, thereby causing the second actual temperature of the heating element 20 to exceed 200°C. In this case, the temperature sensor feeds back the second actual temperature to the controller 60. The controller 60 compares the second actual temperature of the heating element 20 with the second preset temperature, and controls the first switching element 5121 to be turned off according to a comparison result. As a result, the second branch 512 is disconnected, and the power supply unit 40 cannot continue providing electric energy to the heating element 20, so that the second actual temperature of the heating element 20 gradually drops to the second preset temperature. When the temperature drops below the second preset temperature, the controller 60 controls the first switching element 5121 to be turned on again, so that the second actual temperature of the heating element 2 rises to the second preset temperature again. Therefore, the actual temperature of the heating element 20 is basically maintained at the second preset temperature by controlling the first switching element 5121 to be continuously turned on or off.

In some embodiments, the first switching element 5121 is preferably a metal-oxide-semiconductor field-effect transistor (MOS transistor). Compared with a triode, the MOS transistor has the advantages of low power consumption and no need of current consumption, while the triode needs a continuous current to keep a switch on, which results in relatively high power consumption.

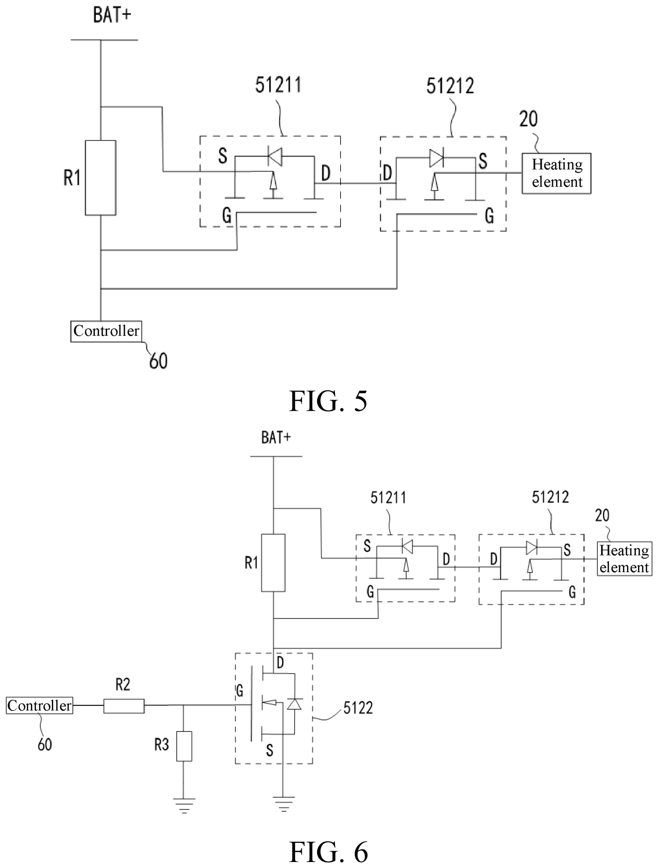

Further, in some embodiments, as shown in FIG. 5, the first switching element 5121 includes a first PMOS transistor 51211 and a second PMOS transistor 51212. Gates of the first PMOS transistor 51211 and the second PMOS transistor 51212 are both electrically connected to the controller 60. A source of the first PMOS transistor 51211 is electrically connected to a positive electrode of the power supply unit 40. A source of the second PMOS transistor 51212 is electrically connected to the heating element 20, and a drain of the first PMOS transistor is electrically connected to a drain of the second PMOS transistor. Therefore, the first PMOS transistor 51211 and the second PMOS transistor 51212 are configured to deviate from each other in this way, thereby preventing the voltage of the heating element 20 from being reversely injected into the power supply unit 40.

When the aerosol generating device 100 is in the preheating stage, the controller 60 controls a high-level signal to be transmitted to the gates of the first PMOS transistor 51211 and the second PMOS transistor 51212, so that the first PMOS transistor 51211 and the second PMOS transistor 51212 each are in an off state. In this case, the second branch 512 is disconnected, and the power supply unit 40 provides electric energy to the heating element 20 through the first branch 511. When the aerosol generating device 100 is in the puffing stage, the controller 60 controls a low-level signal to be transmitted to the gates of the first PMOS transistor 51211 and the second PMOS transistor 51212, so that the first PMOS transistor 51211 and the second PMOS transistor 51212 each are in an on state. In addition, the controller 60 controls the second switching element 5112 to be in an off state, and the power supply unit 40 supplies power to heating element 20 through the second branch 512.

It should be noted that the controller 60 is usually a microcontroller unit of the aerosol generating device 100, and can output pulse width modulation (PWM) control signals. The PWM control signals include high-level signals and low-level signals. The turn-on or turn-off of the first PMOS transistor 51211 and the second PMOS transistor 51212 can be controlled by connecting the PWM control signals to the gates of the first PMOS transistor 51211 and the second PMOS transistor 51212.

Further, in some embodiments, as shown in FIG. 6, to facilitate control, the second branch 512 further includes a third switching element 5122. An input terminal of the third switching element 5122 is electrically connected to the controller 60, and an output terminal thereof is electrically connected to the gates of the first PMOS transistor 51211 and the second PMOS transistor 51212. The third switching element 5122 is configured to be turned on and output a low level when the input terminal is at a high level. In this case, the low level is loaded on the gates of the first PMOS transistor 51211 and the second PMOS transistor 51212, and both the first PMOS transistor 51211 and the second PMOS transistor 51212 are turned on. When the input terminal of the third switching element 5122 is at a low level, the third switching element 5122 is turned off. In this case, the first switching element 5121 is also in an off state. Then synchronous control can be achieved through the third switching element 5122. That is, when the controller 60 outputs a high level, the first switching element 5121 is turned on, thereby connecting the second branch 512. When the controller 60 outputs a low level, the first switching element 5121 is turned off, thereby disconnecting the second branch 512.

Specifically, still referring to FIG. 6, the third switching element 5122 is an NMOS transistor. A gate of the NMOS transistor 5122 is electrically connected to the controller 60, a source of the NMOS transistor 5122 is electrically connected to a reference ground, and a drain of the NMOS transistor 5122 is electrically connected to the gates of the first PMOS transistor 51211 and the second PMOS transistor 51212. Therefore, when the controller 60 inputs a high level to the gate of the NMOS transistor 5122, the NMOS transistor is turned on and a low-level signal is inputted to the drain. The low-level signal is loaded on the gates of the first PMOS transistor 51211 and the second PMOS transistor 51212, thereby turning on the first PMOS transistor 51211 and the second PMOS transistor 51212. When the controller 60 inputs a low level to the gate of the NMOS transistor 5122, the NMOS transistor 5122 enters an off state, and the first switching element 5122 also enters an off state.

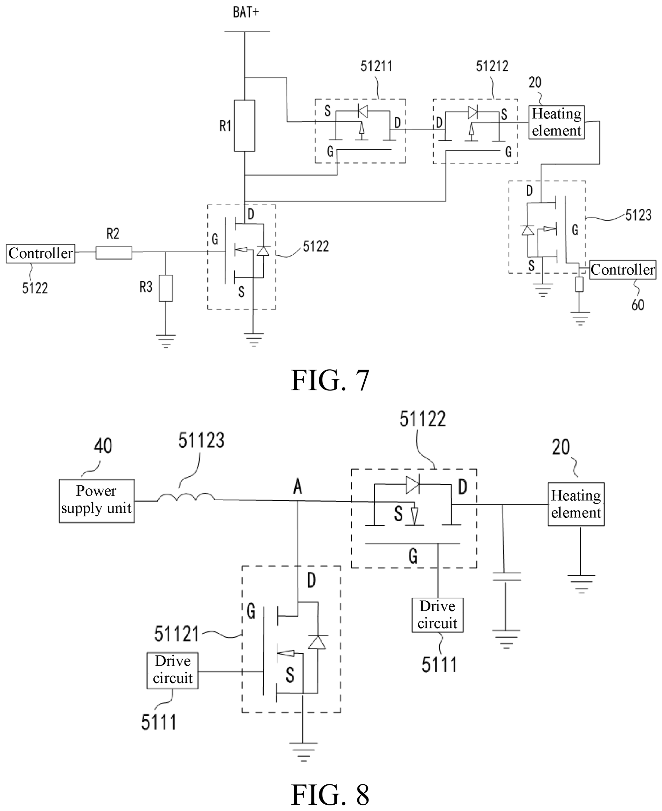

In some embodiments, as shown in FIG. 7, the second branch 512 further includes a fourth switching element 5123 connected in series to the first switching element 5121, and the fourth switching element 5123 is electrically connected between the heating element 20 and a reference ground. In this case, the first switching element 5121 is configured to be in an on state, and the fourth switching element 5123 is configured to maintain the second preset temperature in the puffing stage. That is, the fourth switching element 5123 is configured to be turn on or off according to the second preset temperature in the puffing stage and the second actual temperature of the heating element 20 in the puffing stage. When the second actual temperature of the heating element 20 exceeds the second preset temperature, the controller 60 controls the fourth switching element 5123 to be turned off. In this case, the second branch 512 is disconnected, and the second actual temperature of the heating element 20 drops to the second preset temperature. When the second actual temperature of the heating element 20 is less than the second preset temperature, the controller 60 controls the fourth switching element 5123 to be turned on again. In this case, the second branch 512 is turned on, and the power supply unit 40 supplies power to the heating element 20 again through the second branch 512, so that the temperature of the heating element 20 rises again to the second preset temperature.

Compared with that the second preset temperature in the puffing stage is maintained by the first switching element 5121, in this embodiment, the fourth switching element 5123 is arranged, and the fourth switching element 5123 is arranged between the heating element 20 and the reference ground, so that the second preset temperature in the puffing stage can be maintained more conveniently through the fourth switching element 5123.

In a specific implementation shown in FIG. 7, the fourth switching element 5123 is preferably an NMOS transistor, and the NMOS transistor has very small on resistance and small input capacitance. Additionally, the NOMS transistor has a high response speed and can operate within a wider frequency range. Specifically, the gate of the NMOS transistor 5123 is electrically connected to the controller 60, the drain of the NMOS transistor 5123 is electrically connected to the heating element 20, and the source of the NMOS transistor 5123 is electrically connected to the reference ground. When the second actual temperature of the heating element 20 exceeds the second preset temperature, the controller 60 applies a low level to the gate of the NMOS transistor 5123, and the NMOS transistor 5123 is in an off state, so that the second actual temperature of the heating element 20 drops to the second preset temperature. When the second actual temperature of the heating element 20 is less than the second preset temperature, the controller 60 applies a high level to the gate of the NMOS transistor 5123, and the NMOS transistor 5123 is in an on state, so that the second actual temperature of the heating element 20 rises to the second preset temperature.

In some embodiments, to reduce the design complexity of the aerosol generating device 100, as shown in FIG. 8, the booster circuit 5112 is a BOOST booster circuit. Specifically, one end of the BOOST booster circuit is electrically connected to the power supply unit 40, and the other end thereof is electrically connected to the heating element 20. The booster circuit 5112 further includes a first NMOS transistor 51121 and a second NMOS transistor 51122 connected in parallel to the first NMOS transistor 51121. The first NMOS transistor 51121 and the second NMOS transistor 51122 have a parallel-connection point position A. An inductor 51123 is connected in series between the parallel-connection point position A and the power supply unit 40. A gate of the first NMOS transistor 51121 is electrically connected to the drive circuit 5111, a drain thereof is electrically connected to the parallel-connection point position A, and a source thereof is electrically connected to a reference ground. A source of the second NMOS transistor 51122 is electrically connected to the parallel-connection point position A, a gate thereof is electrically connected to the drive circuit 5111, and a drain thereof is electrically connected to the heating element 20. The gates of the first NMOS transistor 51121 and the first NMOS transistor 51121 are both electrically connected to the drive circuit 5111, and driving signals generated by the drive circuit 5111 are respectively loaded on the first NMOS transistor 51121 and the first NMOS transistor 51121, so that the first NMOS transistor 51121 and the first NMOS transistor 51121 are in an on or off state. It is easy to understand that the drive circuit 5111 is electrically connected to the controller 60, and the controller 60 controls the drive circuit 5111 to generate the above-mentioned driving signals.

An operating principle of the booster circuit 5112 is as follows:
The drive circuit 5111 controls the first NMOS transistor 51121 to be in an on state and the second NMOS transistor 51122 to be in an off state. In this case, the power supply unit 40 charges the inductor 51123. Because the inductor 51123 has a function of energy storage, the inductor 51123 can store the energy released by the power supply unit 40. When the drive circuit controls the first NMOS transistor 51121 to be in the off state and the second NMOS transistor 51122 to be in the on state, the power supply unit 40 and the inductor 51123 discharge the heating element 20 simultaneously, and voltages discharged thereby are superimposed. A superimposed voltage is loaded on the heating element 20, so that the heating element 20 can heat up quickly.

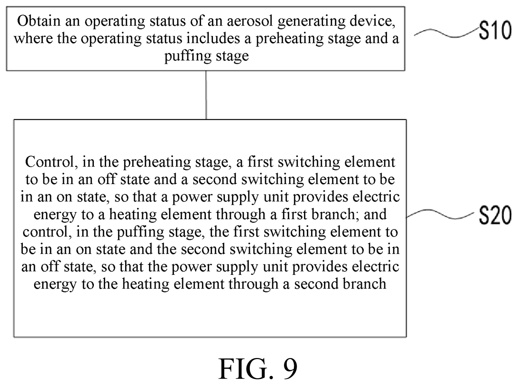

An embodiment of this application further provides a control method for an aerosol generating device, referring to a control method flowchart shown in FIG. 9. The method is applied to the above-mentioned aerosol generating device 100. The method includes the following steps:
S10: Obtain an operating status of the aerosol generating device, where the operating status includes a preheating stage and a puffing stage.
S20: Control, in the preheating stage, the first switching element 5121 to be in an off state and the second switching element 5113 to be in an on state, so that the power supply unit provides electric energy to the heating element through the first branch 511; and
control, in the puffing stage, the first switching element 5121 to be in an on state and the second switching element 5113 to be in an off state, so that the power supply unit provides electric energy to the heating element through the second branch 512.

As can be seen from the description of the above-mentioned embodiment, after the user starts the aerosol generating device 100, the aerosol generating device 100 enters the preheating stage. In this case, the controller 60 controls the first switching element 5121 to be in an off state and the second switching element 5113 to be in an on state, so that the power supply unit 40 provides electric energy to the heating element 40 through the first branch 511. In this case, because the first branch 511 is connected, the first branch 511 can supply power to the drive circuit 5111, and then the drive circuit 5111 generates a driving signal to drive the booster circuit 5112 to operate. The booster circuit 5112 raises the voltage of the power supply unit 40 and applies the voltage to the heating element 20, so that the heating element 20 can heat up quickly.

When the aerosol generating device 100 is in the puffing stage, the controller 60 controls the first switching element 5121 to be in an on state and the second switching element 5113 to be in an off state, so that the power supply unit 40 provides electric energy to the heating element 20 through the second branch 512.

By switching to supply power to the heating element 20 through the second branch 512 in the puffing stage, the power consumption caused by the drive circuit 5111 in the puffing stage can be avoided, and then the battery life of the aerosol generating device 100 can be improved to some extent.

In some embodiments, in the preheating stage, whether the preheating stage is completed can be determined by determining the actual temperature of the heating element 20, and therefore the control method may further include:
obtaining a first actual temperature of the heating element in the preheating stage;
comparing the first actual temperature with a first preset temperature in the preheating stage; and
controlling the second switching element 5113 to be in an off state and controlling the first switching element 5121 to be in an on state, if the first actual temperature reaches the first preset temperature, so that power supply by the power supply unit to the heating element through the first branch 511 is switched to power supply to the heating element through the second branch 512.

Specifically, a temperature sensing element is arranged on the heating element 20, and the preheating stage has a first preset temperature. During the preheating stage of the heating element 20, the temperature sensing element can obtain the first actual temperature of the heating element 20 and feed back the first actual temperature to the controller 60. The controller 60 compares the first actual temperature with the first preset temperature. If the first actual temperature does not reach the first preset temperature, the controller controls the first switching element 5121 to be in an off state and the second switching element 5113 to be in an on state, and the power supply unit 40 continues supplying power to the heating element 20 through the first branch 511.

If the first actual temperature reaches the first preset temperature, the first switching element 5121 is controlled to be in an on state and the second switching element 5113 is controlled to be in an off state, and the power supply unit 40 supplies power to the heating element 20 through the second branch 512. That is, when the aerosol generating device 100 enters the puffing stage, the power supply unit 40 supplies power to the heating element 20 by switching from the first branch 511 to the second branch 512. Since there is no drive circuit 5111 in the second branch 512, the power consumption of the aerosol generating device 100 can be reduced, and the battery life of the aerosol generating device 100 can be improved.

Certainly, as described in the above-mentioned embodiment, whether the preheating stage is completed can alternatively be determined through the heating time of the heating element 20.

Further, in some embodiments, when the power supply unit 40 supplies power to the heating element 20 by switching from the first branch 511 to the second branch 512, the aerosol generating device 100 has entered the puffing stage, and the method further includes the following steps:
S31: Obtain a second actual temperature of the heating element 20 in the puffing stage.
S32: Compare the second actual temperature with a second preset temperature in the puffing stage.
S33: Control the first switching element 5121 to be in an off state if the second actual temperature is greater than the second preset temperature, or
control the first switching element 5121 to be in an on state if the second actual temperature is less than the second preset temperature.

For example, if the second preset temperature in the puffing stage is 200°C, after the first switching element 5121 is turned on, the power supply unit 40 provides electric energy to the heating element 20 through the second branch 512, and the temperature of the heating element 20 may continue rising, thereby causing the second actual temperature of the heating element 20 to exceed 200°C. In this case, the temperature sensor feeds back the second actual temperature to the controller 60. The controller 60 compares the second actual temperature of the heating element 20 with the second preset temperature, and controls the first switching element 5121 to be turned off according to a comparison result. After the first switching element 5121 is turned off, the second branch 512 is disconnected, and the power supply unit 40 cannot continue providing electric energy to the heating element 20, so that the temperature of the heating element 20 gradually drops. In this case, the controller 60 controls the first switching element 5121 to be turned on again, so that the temperature of the heating element 2 rises again to the second preset temperature. Therefore, the temperature of the heating element 20 is basically maintained at the second preset temperature by controlling the first switching element 5121 to be continuously turned on or off.

Finally, it should be noted that the above-mentioned embodiments are merely used for describing the technical solutions of this application, but are not intended to limit the technical solutions. Under the concept of this application, the technical features in the above-mentioned embodiments or different embodiments may alternatively be combined, the steps may be implemented in any sequence, and there may be many other changes in different aspects of this application as described above. For brevity, they are not provided in detail. Although this application is described in detail with reference to the above-mentioned embodiments, a person of ordinary skill in the art should understand that he/she may still make modifications to the technical solutions described in the foregoing embodiments or make equivalent replacements to some technical features thereof, without departing from the scope of the technical solutions of the embodiments of this application.

## Claims

1. An aerosol generating device, comprising:
a heating element, configured to heat an aerosol product to generate an aerosol;
a power supply unit, configured to provide electric energy to the heating element;
a heating circuit with one end electrically connected to the power supply unit and the other end electrically connected to the heating element; and
a controller, configured to control the power supply unit to provide electric energy to the heating element through the heating circuit, wherein
the heating circuit comprises:
a first branch provided with a second switching element and a booster circuit connected in series to the second switching element, wherein one end of the second switching element is electrically connected to the power supply unit, and one end of the booster circuit is electrically connected to the heating element;
a second branch provided with a first switching element, wherein one end of the first switching element is electrically connected to the power supply unit, and the other end of the first switching element is electrically connected to the heating element; and
a drive circuit having an input terminal and an output terminal, wherein the input terminal is electrically connected between the second switching element and the booster circuit, the output terminal is electrically connected to the booster circuit, the input terminal is configured to supply power to the drive circuit, and the output terminal is configured to provide a driving signal to the booster circuit,
wherein the aerosol generating device has a preheating stage and a puffing stage, the controller is electrically connected to the first switching element and the second switching element, and the controller is configured to control, in the preheating stage, the first switching element to be in an off state and the second switching element to be in an on state, so that the power supply unit provides electric energy to the heating element through the first branch; and the controller is configured to control, in the puffing stage, the first switching element to be in an on state and the second switching element to be in an off state, so that the power supply unit provides electric energy to the heating element through the second branch.

2. The aerosol generating device according to claim 1, wherein the first switching element is configured to be turned on or off according to a second preset temperature in the puffing stage and a second actual temperature of the heating element in the puffing stage.

3. The aerosol generating device according to claim 1, wherein the first switching element comprises a metal-oxide-semiconductor field-effect transistor (MOS transistor).

4. The aerosol generating device according to claim 3, wherein the first switching element comprises a first P-channel metal-oxide-semiconductor field-effect transistor (PMOS transistor) and a second PMOS transistor, gates of the first PMOS transistor and the second PMOS transistor are both electrically connected to the controller, a source of the first PMOS transistor is electrically connected to a positive electrode of the power supply unit, a source of the second PMOS transistor is electrically connected to the heating element, and a drain of the first PMOS transistor is electrically connected to a drain of the second PMOS transistor.

5. The aerosol generating device according to claim 4, wherein the second branch further comprises a third switching element, the third switching element has an input terminal and an output terminal, the input terminal is electrically connected to the controller, the output terminal is electrically connected to a gate in the first switching element, and the third switching element is in such a configuration that the third switching element is turned on and outputs a low-level signal when the controller outputs a high-level signal; and the third switching element is in an off state when the controller outputs a low-level signal.

6. The aerosol generating device according to claim 5, wherein the third switching element comprises an N-channel metal-oxide-semiconductor field-effect transistor (NMOS transistor), a gate of the NMOS transistor is electrically connected to the controller, a source of the NMOS transistor is electrically connected to a reference ground, and a drain of the NMOS transistor is electrically connected to a gate in the first switching element.

7. The aerosol generating device according to claim 1, wherein the second branch further comprises a fourth switching element connected in series to the first switch, the fourth switching element is connected between the heating element and a reference ground, the first switching element is configured to be in an on state, and the fourth switching element is configured to be turned on or off according to a second preset temperature in the puffing stage and a second actual temperature of the heating element in the puffing stage.

8. The aerosol generating device according to claim 7, wherein the fourth switching element comprises an NMOS transistor, a gate of the NMOS transistor is electrically connected to the controller, a drain of the NMOS transistor is electrically connected to the heating element, and a source of the NMOS transistor is electrically connected to the reference ground.

9. A control method for an aerosol generating device, applied to the aerosol generating device according to claim 1, comprising:
obtaining an operating status of the aerosol generating device, wherein the operating status comprises a preheating stage and a puffing stage;
controlling, in the preheating stage, the first switching element to be in an off state and the second switching element to be in an on state, so that the power supply unit provides electric energy to the heating element through the first branch; and
controlling, in the puffing stage, the first switching element to be in an on state and the second switching element to be in an off state, so that the power supply unit provides electric energy to the heating element through the second branch.

10. The control method according to claim 9, wherein the aerosol generating device further comprises a temperature sensing element, the temperature sensing element is configured to measure a temperature of the heating element, and the control method further comprises:
obtaining a first actual temperature of the heating element in the preheating stage;
comparing the first actual temperature with a first preset temperature; and
controlling the second switching element to be in an off state and the first switching element to be in an on state, if the first actual temperature reaches the first preset temperature, so that power supply by the power supply unit to the heating element through the first branch is switched to power supply to the heating element through the second branch.

11. The control method according to claim 9, wherein after the controlling the first switching element to be in an on state and the second switching element to be in an off state, so that the power supply unit provides electric energy to the heating element through the second branch, the method further comprises:
obtaining a second actual temperature of the heating element in the puffing stage;
comparing the second actual temperature with a second preset temperature; and
controlling the first switching element to be in an off state if the second actual temperature is greater than the second preset temperature, or
controlling the first switching element to be in an on state if the second actual temperature is less than the second preset temperature.
